Europäisches Patentamt

European Patent Office

Office européen des brevets

(11) Publication number: **0 140 533**
**A2**

# (12) EUROPEAN PATENT APPLICATION

(21) Application number: **84305936.1**

(22) Date of filing: **30.08.84**

(51) Int. Cl.⁴: **G 06 F 12/10**

(30) Priority: **07.09.83 US 530768**

(43) Date of publication of application:
**08.05.85 Bulletin 85/19**

(84) Designated Contracting States:
**DE FR GB IT**

(71) Applicant: **AMDAHL CORPORATION**
**1250 E. Arques Avenue**
**Sunnyvale California(US)**

(72) Inventor: **Woffinden, Gary Arthur**
**12 Blossom Way**
**Scotts Valley California(US)**

(72) Inventor: **Hanson, Donald Laverne**
**10401 Lone Oak Lane**
**Altos Hills, Cal(US)**

(72) Inventor: **Chambers, David Ernest**
**11476 Lindy Place**
**Cupertino California(US)**

(74) Representative: **Crawford, Andrew Birkby et al,**
**A.A. THORNTON & CO. Northumberland House 303-306**
**High Holborn**
**London WC1V 7LE(GB)**

(54) Time shared translation buffer.

(57) Disclosed is a memory unit for use in a data processing system. The data processing system specifies memory locations with virtual addresses. First and second virtual stores are addressed by the virtual addresses. A real store, such as a mainstore, is addressed by real addresses. A virtual-to-real translator translates virtual addresses to provide real addresses whenever a real address corresponding to a virtual address is required.

EP 0 140 533 A2

./...

Croydon Printing Company Ltd.

FIG.—1

## TIME SHARED TRANSLATION BUFFER

### Cross Reference to Related Applications:

APPARATUS FOR REVERSE TRANSLATION
By Inventors: Gene Myron Amdahl, David Laverne
Hanson, Ronald Karl Kreuzenstein, Gwynne Lynn
Roshon-Larsen and Gary Arthur Woffinden (AMDH 3219 DEL);
I-FETCH COMPANION LINE
By Inventors: Gary Arthur Woffinden and
Theodore Sherman Robinson (AMDH 3223 DEL);
DATA SELECT MATCH
By Inventors: Gary Arthur Woffinden, Gene Myron Amdahl
and Donald Laverne Hanson (AMDH 3913 DEL); and
VIRTUALLY ADDRESSED CACHE
by Inventors: Gary Arthur Woffinden, Donald Laverne
Hanson and Gene Myron Amdahl (AMDH 3914 DEL),
All Assigned to the Same Assignee as the Present Invention.

### Background of the Invention

The present invention relates to the field of instruction
controlled digital computers and specifically to methods
and apparatus associated with storage units in data proces-
sing systems.

AMDH15/TSTLB
AMDH 3222 DEL
83/09/06

This application is a continuation-in-part of the application entitled MEMORY SYSTEM invented by Gary Arthur Woffinden and Donald Laverne Hanson, filed August 29, 1983, and assigned to the same Assignee as the present invention.

Recent data processing systems have been designed with virtual storage in which different user programs are operable in the system. The programs identify storage locations with logical addresses. The logical addresses are translaed dynamically to real addresses during the processing of instructions. Dynamic address translation is particularly important in multi-programming environments since different programs are free to use the same logical addresses. To avoid interference, the system must translate logical addresses, which are not unique, to real addresses which are unique for each executing program.

In order to provide for the uniqueness of the real addresses when non-unique logical addresses are employed, translation Tables which are unique for each program are provided. The translation Tables are typically stored in main storage. The accessing of the translation Tables in main storage, however, requires a significant amount of time which can degrade system performance. In order to enhance the performance when translations are made, it is desirable to store translated information in high-speed buffers in order to reduce the number of accesses to main storage.

It is common in data processing systems to have a memory hierarchy wherein buffer memories (caches) of relatively low capacity, but of relatively high speed, operate in cooperation with main memories of relatively high capacity but of relatively low speed. It is desired that the vast majority of accesses, either to fetch or store information, be from the buffer memory so that the overall access time

AMDH15/TSTLB
AMDH 3222 DEL
83/09/06

of the system is enhanced. In order to have the vast majority of accesses come from the relatively fast buffer memory, information is exchanged between the main memory and the buffer memory in accordance with predetermined algorithms.

In virtual storage, multi-programming systems, it is also desirable to store information in the buffer memory to reduce accesses to main store. In addition to real addresses of data and the data itself, the buffer memory stores logical addresses and program identifiers. With this information in the buffer memory, relatively more time consuming accesses to main storage for the same information are avoided.

The efficiency with which a buffer memory works in decreasing the access time of the overall system is dependent on a number of variables. For example, the capacity of the buffer memory, the capacity of the main store, the data transfer rate between stores, the replacement algorithms which determine when transfers between the main store and buffer are made, and the virtual to real address translation methods and apparatus.

In the above-referenced copending application entitled VIRTUALLY ADDRESSED CACHE, virtual-addressed and real-addressed stores are described.

One store is addressed with real addresses and the other store is addressed with virtual addresses. If a virtual address cannot access the desired location in the virtual store, the virtual address through a virtual-to-real translator is translated to a real address and the location is addressed in the real store. Whenever a real address needs to access a virtual address location in the virtual-

AMDH15/TSTLB
AMDH 3222 DEL
83/09/06

addressed store, the real address is converted through a
real-to-virtual translator in order to locate corresponding
locations in the virtual-addressed memory.

In that system of the copending applications, a data processing system has a comparatively low capacity, high-speed
virtual-addressed buffer memory and a comparatively high
capacity, slow-speed real-addressed main store. The memory
hierarchy is organized as a virtual storage system in which
programs define storage locations using logical addresses.
Logical addresses can be either real addresses or virtual
addresses. When a program specifies an access using a logical address, the logical address accesses the buffer directly if the logical address location is resident in the
buffer.

If the logical address location is not resident in the buffer, the mainstore is addressed with the real address to
access the addressed location. If the logical address is a
virtual address, the virtual address is translated to a
real address before mainstore is addressed.

With this hierarchy, the efficiency with which the buffer
memory decreases the access time of the overall system is
enhanced since, for accessed locations in the buffer, no
virtual-to-real translation is required.

The buffer typically contains a small fraction of the
mainstore data at any time. In the virtual-addressed buf-
fer, the location of the data is not a function of mainstore real addresses, but is a function of the virtual addresses. Therefore, mainstore addresses do not map to
unique buffer addresses. More than one real address can be
translated to the same virtual address location in the buf-
fer.

AMDH15/TSTLB
AMDH 3222 DEL
83/09/06

In the preferred embodiment, the TLB stores virtual to real page address translations and associated control information. Data is stored in the buffer in lines. Associated with each line of data is a tag identifying the validity of the data and the TLB entry used to fetch it from mainstore. When a requesting virtual address attempts to access data in the buffer, the requesting address is compared to both the accessed TLB entry and tag entry. If the TLB does not match, then a translation must be performed and the results placed in the TLB. If the TLB entry matches the requesting address, then the desired real page address is TLB resident. If the TLB matches and the tag does not match, then the requested data is not buffer resident and must be moved into the buffer from mainstore from the real page address from the matching TLB entry. If the TLB matches and the tag matches, then the data is buffer resident in the location corresponding to the matching tag.

Since different virtual addresses may specify the same data location that corresponds to a single real address location in mainstore, it is possible that the virtual-addressed buffer will store more than one copy, called a synonym, of the same data at different locations. For this reason, a real-to-virtual translator translates mainstore real addresses to all buffer virtual addresses to locate buffer resident synonyms when modified data is stored into the buffer.

In the system described in the copending applications, the buffer memory is partitioned into two stores, one store for instruction accesses (IF) and one store for operand (OP) accesses. By partitioning the system in this way, instruction processing and operand processing is carried out concurrently thereby enhancing the overall performance of the system. Because two stores are required, IF and OP

AMDH15/TSTLB
AMDH 3222 DEL
83/09/06

stores, each store requires address translation. When the buffer stores are virtually addressed, like those in the system described in the copending applications, the translation lookaside buffers require storage of a large amount of data. This data includes the translation information, control information, the logical addresses and the corresponding real addresses. While storage of this data for both the operand buffer and the instruction buffer is possible, such storage tends to require an excessive amount of circuitry and is to be avoided if possible.

There is a need for improved buffer memory systems which are particularly suitable for virtual storage and for multi-programming data processing systems. Specifically, there is a need in such systems for memory hierarchies which have improved apparatus which requires fewer circuits while permitting efficient operation.

## Summary of the Invention

The present invention is a memory unit for use in a data processing system. The data processing system specifies memory locations with virtual addresses. First and second virtual stores are addressed by the virtual addresses. A real store, such as a mainstore, is addressed by real addresses. A virtual-to-real translator translates virtual addresses to provide real addresses whenever a real address corresponding to a virtual address is required.

In one embodiment, the virtual-to-real translator includes first and second translation lookaside buffers corresponding to the first and second virtual stores for storing real addresses corresponding to virtual addresses for the first and second virtual stores, respectively.

AMDH15/TSTLB
AMDH 3222 DEL
83/09/06

In one particular embodiment, one of the translation lookaside buffers stores only a subset of the information stored in the other translation lookaside buffer. Apparatus is provided for sensing the validity of the translation lookaside buffer entry storing the subset information. If that entry may be invalid, then the other translation lookaside buffer storing all the information is accessed and the subset information is updated with a valid new entry.

In one system, one of the virtual stores is utilized for storing operand information and the other virtual store is used for storing instruction information. In this system, both operand processing and instruction processing is carried out concurrently using virtual addresses to thereby provide an efficient, high-performance system. When two translation lookaside buffers are employed, one only storing a subset of the information, the number of circuits required for the virtual-to-real translator is reduced, thereby reducing the cost of the system.

In accordance with the above summary, the present invention achieves the objective of providing an improved virtual storage and multi-programming data processing system.

Additional objects and features of the invention will appear from the following description in which the preferred embodiments of the invention have been set forth in detail in conjunction with the drawings.

## Brief Description of the Drawings
FIG. 1 depicts one particular embodiment of the FIG. 1 data processing system which utilizes virtual and real memory.

AMDH15/TSTLB
AMDH 3222 DEL
83/09/06

FIG. 2 depicts a block diagram of the addressing mechanism
of the FIG. 1 system which includes the virtual-to-real
translation of the present invention.


## DETAILED DESCRIPTION


### SECTION 0 - OVERALL SYSTEM

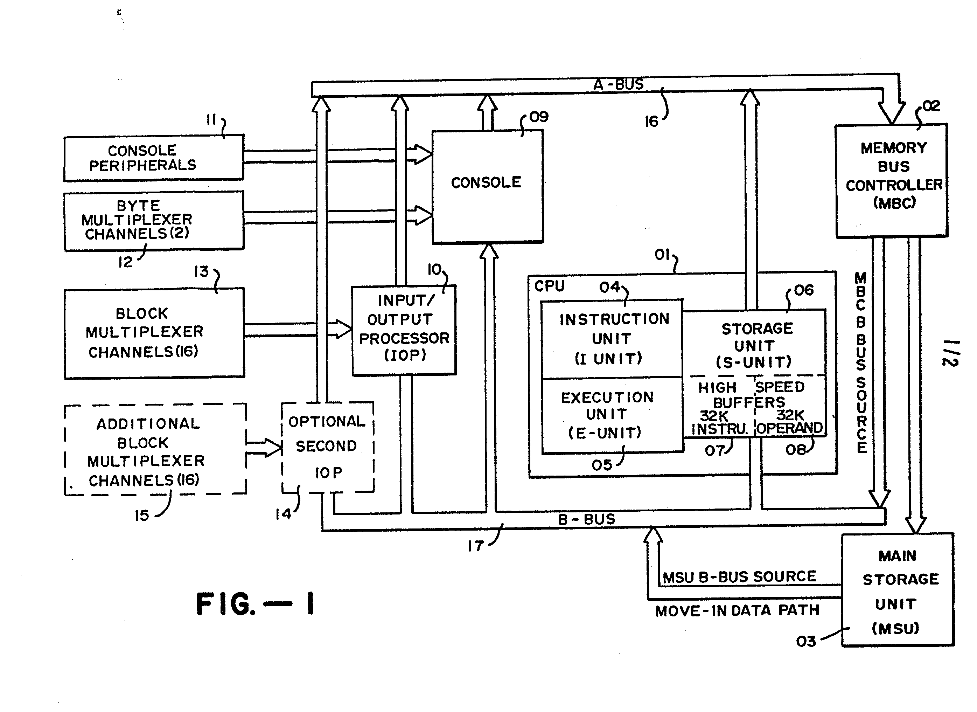

FIG. 1 shows a block diagram of a data processing system.
The system includes a central processing unit (CPU), a memory bus controller (MBC), and a main storage unit (MSU).
The central processing unit 1 includes the I-unit 4, the
E-unit 5, and the S-unit 6.  The instruction unit (I-unit)
4 fetches, decodes, and controls instructions and controls
the central processing unit.  The execution unit (E-unit) 5
provides computational facilities for the data processing
system.  The storage unit (S-unit) 6 controls the data processing machines instruction and operand storage and retrieval facilities.  The S-unit includes the instruction
buffer 7 which provides high-speed buffer storage for instruction streams and the operand buffer 8 which provides
high-speed buffer storage for operand data.

Other major parts of the FIG. 1 system includes one or two
input-output processors (IOP) 10,14 which receives and processes input-output requests from the central processing
unit 1 and provides block multiplexer channels; the console
9 which communicates with the central processing unit 1 to
provide system control and byte multiplexer channels; the
memory bus controller (MBC) 2 which provides main memory
and bus control, system wide coordination of functions and
timing facilities; and the main storage unit (MSU) 3 which
provides the system with large capacity memory.

AMDH15/TSTLB
AMDH 3222 DEL
83/09/06

The data processing system shown in FIG. 1 employs a dual bus structure including the A bus 16 and the B bus 17. The A bus carries data from the console, the input-output processor 10, and the central processing unit 1 to the memory bus controller 2. The B bus carries data from the memory bus controller 2 and the main storage unit 3 to the console 9, the input-output processor 10 and the central processing unit 1.

## STORAGE UNIT

### SECTION 1 - OVERVIEW

Referring to FIG. 1, The Cache Storage Unit (S-Unit) 6 provides high speed cache storage for instructions and operands. The S-Unit 6 receives and processes all requests for data (either instructions or operands) by the I-Unit 4. Virtual to real address translations are accomplished by the S-Unit, which also maintains the Translation Lookaside Buffer (TLB). Cache to mainstore data transfers necessary to honor I-Unit requests for data are initiated by the S-Unit.

The S-Unit 6 also provides the Bus interface between the I-Unit 4 and the E-Unit 5 portions of the CPU and the rest of the system.

In Section 2, the various storage arrays, which constitute the principal S-Unit resource, are described in detail. Section 3 describes the hardware which supports the addresses used in accessing the arrays and which determines the residency of data in the cache. In Section 4, the data paths necessary for reading and writing the cache, as well as routing message data, are described. In Section 5, interfaces are described. In Section 6, the control is

AMDH15/TSTLB
AMDH 3222 DEL
83/09/06

described and algorithms for specific operations are presented. In Section 7, machine checks are described.

## SECTION 2 - ARRAYS

### 2.1 Introduction

The S-unit has a cache structure which provides a quantity of fast storage to buffer the currently active subset of mainstore data. This fast storage is referred to as the High-Speed Data Buffer (HSDB) and includes IF and OP buffers 7 and 8 of FIG. 1.

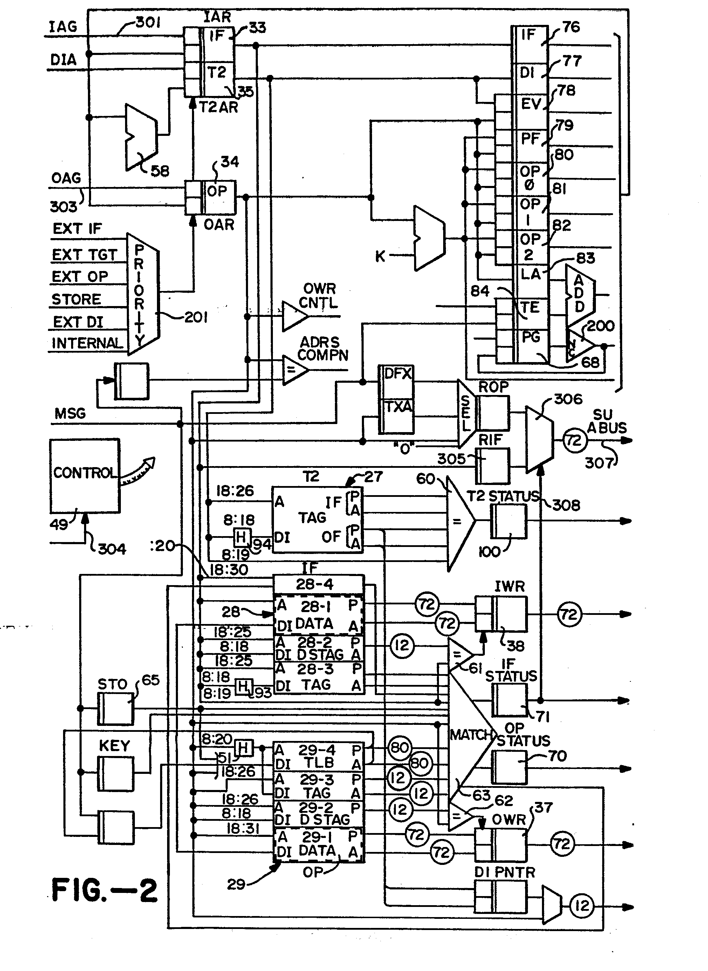

Referring to FIG. 2, the S-Unit 6 includes several storage arrays including a TAG 2 (T2) array 27, an instruction fetch (IF) array 28, and an operand (OP) array 29.

Since the HSDB buffers only a subset of mainstore data, it is necessary to identify the address of any data which is resident in the HSDB. The address of a byte of data may be reconstructed in three steps. First, the low-order bits (bits 19:31 of logical addresses, bits 21:31 of system absolute addresses) are determined by the data's position within the HSDB. To determine the remaining address bits, we can examine the High-Speed Tag, which contains an entry for each line (32 bytes) of storage in the HSDB. This Tag entry contains the status of the line, logical address bits 8:18, and a pointer to an entry in the Translation Lookaside Buffer (TLB). The entries in the TLB are page-specific and hold the most recent translations from logical addresses to system addresses. The TLB entry for a page (4K bytes) tells us the addressing mode of the page (virtual or real), bits 0:11 of the logical address, the ST0 for virtual pages, and system absolute address bits 4:20. Data cannot reside in the HSDB unless the TLB contains an entry for that data's page.

AMDH15/TSTLB
AMDH 3222 DEL
83/09/06

In order to enhance the reliability of the S-Unit, error correction capability has been included in the Operand HSDB. Associated with this function is the High-Speed Operand ECC Array (ECC Array).


## 2.2 High-Speed Data Buffer

The High-Speed Data Buffer, buffers 7 and 8 in FIG. 1, reduce the apparent mainstore 3 access time by holding currently active instructions and operands in a fast-access storage array, that is in buffers 7 and 8.


### 2.2.1 Organization.

The HSDB facility contains two caches of 32K bytes each, one is the INSTRUCTION FETCH (IF) cache 28, and the other is the OPERAND ACCESS (OP) cache 29. The IF and OP caches 28 and 29 are similar as far as organization and addressing are concerned. Henceforth the term "cache" will refer to either of the buffers 7 and 8.

Each cache is set-associative, with a set size of two. The two associativities are called, Primary (Pri,P) and Alternate (Alt,A), although they are equivalent in function.

Each cache contains 512 addressable sets. Each set consists of two lines (Pri or P, Alt or A). Each line consists of four consecutive quarter lines (QL). Each quarter line consists of 8 consecutive bytes (B). Each byte consists of 8 bits and one parity bit. A line of data, therefore, consists of 32 consecutive bytes, beginning on a 32-byte boundary.

Associated with each line is a Tag, stored in Tag arrays 28-2 and 29-2 and duplicated in T2 array 27, where each holds addressing and status information for the line; the Tags are described separately, below. In the IF cache 28 each Tag is shared between even-odd pairs of sets, effectively creating pseudo-64-byte lines in order to reduce Tag storage requirements.

2.2.2 Addressing. The HSDB, along with the rest of the S-Unit, accesses data by a logical address (either virtual or real) known to the executing program, not by the system absolute address known to mainstore.

The OP, IF and T2 caches are independently addressed. Address bits 18:26 of the instruction address from IF address register 33, the operand address from the operand address register 34 select one of the 512 sets from the appropriate cache. All lines which have the same address bits 18:26 in their logical addresses will map into the same set of a cache. Address bits 27:31 comprise the byte index, which selects the beginning byte within the 32-byte lines of the addressed set.

2.2.3 Operational Capabilities.
2.2.3.1 Fetches. In the OP Cache 29, fetches are allowed on any byte boundary and can be of any length from 0 to 8. If the desired bytes reside within a single line, the fetch may complete in one access. If the fetch requires data from two distinct lines (line crosser, LX), a separate access is required to access data from each of the two lines. During a fetch, both Pri and Alt associativities are accessed concurrently, with selection between the two determined by the results of Data Select Match 62,64 of Data Select Tags (DS TAG) 28-3,29-3 associated with the Tag. The DS TAGS are stored in the DS TAG arrays 28-3 and 29-3.

There is an eight-byte-wide (72 bits including parity) data path coming out of each of the two, P and A, associativities of a cache. Any eight consecutive bytes (mod 32) within a line may be fetched at once. The

AMDH15/TSTLB
AMDH 3222 DEL
83/09/06

position of a byte within the eight-byte data path depends upon bits 29:31 of the byte's address, not upon those bits of the request address. For example, a fetch to address 2D would yield, from each associativity, bytes 30 31 32 33 34 2D 2E 2F , not bytes 2D 2E 2F 30 31 32 33 34 .

The receiving unit (e.g. OWR register 37 or IWR register 38), in addition to selecting between Pri and Alt, rotates the data into proper alignment and latches the desired bytes.

In the IF Cache, fetches are constrained to halfword boundaries, since all instructions not on this boundary result in a specification error. The memory array for the IF cache has the same capabilities as the OP cache; however, the Data Paths provide only halfword rotation.

2.2.3.2 Stores. Stores are done only to the OP cache. A Data Integrity Unit in MBC of FIG. 1 will remove all other copies of the line from the IF and OP caches before the store is done.

To do a store, two pipeline passes are needed: a fetch pass, which serves to verify the existence of the line of data in the cache, that it is the only copy of data residing in any cache, and to determine which associativity it is in, and a store pass, which actually stores the data. The fetch pass of a store is similar to a fetch access as described above, and the store pass differs only in that data-in and write strobes are supplied to the bytes of the array which are to be written. Store data is supplied by an eight-byte-wide data path from the Result Register (not shown) of RR bus 41 of FIG. 3 into the OP cache, including a rotator 42 and selector 43 for proper alignment of data.

AMDH15/TSTLB
AMDH 3222 DEL
83/09/06

The Result Register is the output register of the E-Unit 5 of FIG. 1.

Line-crossing stores require a separate fetch and store pass for each of the two lines involved.

2.2.3.3 Move-ins. In FIG. 3, a 32-byte-wide data path (MS? DI) 44 to selector 45 is shared by both OP and IF caches for Move-ins of new lines into either cache from Mainstore. The MSDI? register is loaded from an 8-byte data in path in four successive cycles.

2.2.3.4 Move-outs. Since the OP cache 8 is operated as a Store-to device, modified lines of data must be returned to Mainstore 3 when their storage in the OP cache 8 is vacated. This is accomplished by doing four successive eight-byte accesses to the line and routing the fetched data to Mainstore 3.

2.3 Operand ECC Array

Modified lines in the OP cache 8 contain the only valid copy of their data. To enhance reliability single-error-correction, double-error-detection capability (ECC) has been implemented in the OP cache. The checking-block size is eight bytes, i.e. a Quarterline. Each Quarterline of data in the OP cache is associated with 13 check bits: the eight byte-parity bits, a four-bit check character which is a function of the 64 data bits, and a parity bit over that check character. The byte-parity bits are part of the OP HSDB described above. The four-bit check character can be thought of as a Hamming encoding of the eight-bit longitudinal redundancy check (LRC) of the eight data bytes; the LRC itself need not be saved. The LRC character is an eight-bit character. Each bit is the parity over one bit position of all eight bytes in the quarterline. The check character, together with its parity bit, is stored in the Operand ECC Array, which has one five-bit field for each quarterline of the OP cache. On each fetch or store access, the check characters for the addressed Quarterline and for the next Quarterline (wrapped around within the line) are accessed; in this way the ECC logic can keep the check characters updated even in the event of Quarterline-crossing stores. A check character is stored along with each Quarterline of a Move-in, and a Quarterline's check character is read out for use in correction with each of the four accesses of a Move-out. Correction is performed on Move-outs only; byte parity checking is done on other fetch addresses.

The OP ECC array is accessed one cycle later than the OP HSDB.

## 2.4  Translation Lookaside Buffer

The Translation Lookaside Buffer (TLB) 29-4 in FIG. 2 provides storage to translate virtual or real page addresses to mainstore page (system page) addresses in a single machine cycle. The TLB is divided into two parts, teh Virtual Address part (VA TLB) and the System Address part (SA TLB). The VA TLB is implemented on the S-unit while the SA TLB is implemented on the MBC. Only the VA TLB is described in this section. The TLB is organized with 256 two-way associative sets to be described below.

2.4.1  Addressing.  The two associativities of the TLB are accessed concurrently by different hash functions of the OAR address.  Shown below is the addressing function used to access each associativity.  The numbers refer to address bit positions in the OAR.

```
         10      8
Pri  12  XOR  14  XOR  16  17  18  19
         13      15

     11      9
Alt  XOR  13  XOR  15  16  17  18  19
     12      14
```

2.4.2  TLB Entry.  The fields within a VA TLB entry are shown in Table 2.4.2 below and are listed with a brief explanation of their purpose.

## TABLE 2.4.2 S-UNIT TLB BIT ASSIGNMENT

| BIT POSITION | 0 | 1 | 2 | 3 | 4 | 5 | 6 | 7 |
|---|---|---|---|---|---|---|---|---|
| | 8 | 9 | 10 | 11 | 12 | 13 | 14 | 15 |

| STATUS | V0 | V1 | EP0 | EP1 | V2 | * | P/P | * |
|---|---|---|---|---|---|---|---|---|
| | F | SAM | SYS | | | | | * |

| EFFECTIVE ADDRESS | 0 | 1 | 2 | 3 | 4 | 5 | 6 | 7 |
|---|---|---|---|---|---|---|---|---|
| | * | 8 | 9 | 10 | 11 | * | 20 | * |

| SEGMENT BASE | 8 | 9 | 10 | 11 | 12 | 13 | 14 | 15 |
|---|---|---|---|---|---|---|---|---|
| | * | – | PS0 | PS1 | PES | SS0 | SS1 | * |

| SEGMENT BASE | 16 | 17 | 18 | 19 | 20 | 21 | 22 | 23 |
|---|---|---|---|---|---|---|---|---|
| | * | – | – | – | – | 24 | 25 | * |

AMDH15/TSTLB
AMDH 3222 DEL
83/09/06

| KEYS | K0 | K1 | K2 | K3 | K4 | C | * | * |
|------|----|----|----|----|----|----|----|----|
| | --- | --- | --- | --- | --- | --- | --- | --- |
| | K0 | K1 | K2 | K3 | K4 | C | * | * |

```
                                    * = parity bits
                                    - = unused
```

<u>Valid Bits (V0, V1, V2)</u> indicate the type of entry currently occupying this slot. The table below shows the encoding of these bits.

| V(0) | V(1) | V(2) | Meaning |
|------|------|------|---------|
| 0 | 0 | 0 | Invalid |
| 0 | 0 | 1 | Unused |
| 0 | 1 | 0 | Common |
| 0 | 1 | 1 | Virtual |
| 1 | 0 | 0 | Real |
| 1 | 0 | 1 | Unused |
| 1 | 1 | 0 | Real, Common |
| 1 | 1 | 1 | Real, Virtual |

<u>Eviction Pending Bits (EP0, EP1)</u>: Two eviction pending bits are stored, one for each system absolute address. If a request requires displacing a valid translation, the operation of freeing a slot in the TLB for the new translation is referred to as a TLB Eviction. Associated with the eviction is a Page Release in which all lines resident in the Data Buffer associated with the evicted page are removed. FIG. 3 shows the possible states of the Eviction Pending Bits along with the number of valid TLB entries.

<u>The Flipper Bit (F)</u> identifies which of the two system address fields of a TLB entry is the translation of the logical address contained in the entry. The other system address field is not used for current translations. Its
use is restricted to providing the system address needed to
evict lines from the buffer.


Pre/Post Purge Bit (P/P):  In the system, a TLB purge can
logically be performed in one machine cycle. When a new
TLB entry is made, the pre/post bit of the entry is set to
the value of the system pre/post bit. When a purge TLB
operation is performed, the system pre/post purge bit is
toggled. The Purge TLB controller then serially updates
each TBL entry to reflect any change in state required by
the purge. As part of the purge update, the pre/post purge
bit is written to the current value of the system pre/post
purge bit. When a request accesses the TLB, the pre/post
purge bit of the entry is matched against the pre/post
purge bit of the system. If the bits match, there is no
pending purge outstanding and the TLB entry can be used as
is. If the bits do not match, there is a pending purge
whose effects, if any, on the state of the TLB entry have
not been reflected in the TLB entry. If this occurs, the
purge is applied to the TLB entry before it is used in the
Match function 63.


Address Compare Bit (AM) indicates that the system absolute
address of the current entry matches the address compare
address.


System/User Bit (S/U) indicates if the current translation
belongs to System State software or User State software.
Inclusion of this information allows partial purges of the
TLB when the purge is initiated in User State.


Effective Address (E(0-11,20)) uniquely identifies the
virtual page address occupying the TLB entry. The TLB
holds information for a small subset of virtual pages, thus

AMDH15/TSTLB
AMDH 3222 DEL
83/09/06

a particular entry must be distinguished from all others which could also occupy its slot in the TLB.

Segment Table Origin (STO(8-25)) identifies the virtual address space to which a translation belongs. The Segment Table Origin uniquely identifies the translation tables used to translate a virtual address to a system address.

Control Register 0 (CR0(8-12)): These bits identify the page size, segment size, and translation type that was used to perform this translation. The previous field defined which tables were used and this field defines the manner in which they were used.

Protection Keys (K0(0-7), K1(0-7)): The system keys associated with each 2K page in mainstore are included in each TLB entry so that accesses for data can be checked for protection exceptions. Two key fields exist to include both keys associated with each page of a machine operating in 4K page size mode. Included in each of these 8 bit keys are the following:
- Four bit key
- Change bit
- Fetch protect bit
- Key parity
- Bus parity

The first parity bit is the parity bit from mainstore. The second parity bit is the parity bit that the bus structure appends upon the byte when the message is sent from mainstore. These parity bits are used to detect errors in mainstore and the buffer, respectively.

AMDH15/TSTLB
AMDH 3222 DEL
83/09/06

## 2.5  High-Speed Tag

The High Speed Tag identifies each line of buffer-resident data with the SA field of the TLB entry which contains the system page address of the line.  The SA field pointed to by the TAG provides the address should the line be moved out of the cache to mainstore.

In the OP buffer, there is one TAG for each data line.  In the IF buffer, there is one tag for every pair of consecutive lines, constraining both lines of a pair to belong to the same page in system storage.  In the OP and IF pipelines, the TAGs are accessed in parallel with the data.

A second copy of Op and IF TAGs is kept in the T2 array. This allows background operations to search the buffer without affecting performance in the OP and IF pipelines. In addition, this second copy can be used as a pointer to the system page address in the event that the first copy develops a parity error.

2.5.1  Tag Entry.  The fields in a Tag entry are shown in the following Table 2.5.1 and thereafter are described briefly.

### Table 2.5.1

| BIT POSITION | 0 | 1 | 2 | 3 | 4 | 5 | 6 | 7 | 8 | 9 | 10 | 11 |
|---|---|---|---|---|---|---|---|---|---|---|---|---|
| TAG1 | V0 | V1 | F | PA | 0 | 1 | 2 | 3 | 4 | 5 | 6 | * |
| TAG2 | V0 | V1 | F | PA | 0 | 1 | 2 | 3 | 4 | 5 | 6 | * |
| DATA SELECT | 8 | 9 | 10 | 11 | 12 | 13 | 14 | 15 | 16 | 17 | 18 | * |

AMDH15/TSTLB
AMDH 3222 DEL
83/09/06

The Pointer Field points to one SA field in the SA TLB, thus tying the line to a particular system page address. This field has three components. The TLB Index bits 0:6 in bit positions 4:10 point to an entry in each of the associativities, the Primary/Alternate Bit, P/A or PA, indicates which associativity contains the correct translation for the line, and the flipper bit, F, indicates which system absolute address is associated with this page. All these fields participate in the Data Resident Match. The seven bits of the TLB index define 128 locations, that is, $2^7$. The TLB array has 256 locations, that is, $2^8$. The eight bit for the $2^8$ locations is derived from address bit 19 directly, since address bit 19 is implicit in the location of the line in mainstore.

Valid Bits (V(0-1)) of an entry indicate the state of the data currently residing in a slot in the Data Buffer. The Valid Bits influence the Data Resident Match as well as the Buffer Replacement Algorithm. The meaning of these bits differs between the OP and the IF Tag Arrays. Shown below is the two bit encoding used in the OP Tag.

| V(0) | V(1) | Meaning |
|------|------|----------|
| 0 | 0 | Invalid |
| 0 | 1 | Public |
| 1 | 0 | Private |
| 1 | 1 | Modified |

Public indicates that other copies of this line may exist in the system. If a line is private, it is the only copy of that line. Modified means that the data line has been modified and must update mainstore when displaced from the bufer.

IF tags differ from OP tags because each IF tag services two lines in the IF HSDB. The two lines' addresses differ only in system address bits A26 and are referred to as companion lines. Each of the valid bits is associated with one of these companion lines. The bit then determines if the line is invalid or public as follows:

| V(0) | V(1) | SA26 | Meaning |
|------|------|------|---------|
| 0 | - | 0 | Invalid |
| 1 | - | 0 | Public |
| - | 0 | 1 | Invalid |
| - | 1 | 1 | Public |

## 2.6  Data Select Tags

The Data Select Tags are used to select between primary and alternate data supplied by both associativities of the HSDB. Since data selection is a binary decision, only the primary tags are required. There is a one to one mapping between the Data Select Tags and the Primary Data Resident Tags, thus, there are half as many IF Data Select Tags as there are OP Data Select Tags. Each data select tag entry consists of logical address bits 8-18.

## 2.7  Replacement Ram

Each time there is a fetch access to the Buffer, the Replacement Ram on the S-Unit is read. The Replacement Ram holds one bit for each line in the OP Buffer, and one bit for every two lines in the IF Buffer. The bit indicates which Buffer associativity was last accessed. This information is used to implement an LRU (Least Recently Used) Replacement Algorithm. When a line is about to be Moved In, the preliminary flow of an IF flow or, the OP flow which found the line missing, reads the Replacement Ram and latches the data. When the Move-In occurs, if the line does not get Data Select Match then the data is moved in to the associativity not pointed to by the latched Replacement P/A bit. If Data Select Match occurs, then the line must

24

be moved into the associativity which matched, otherwise Data Select Match would not be able to distinguish between primary and alternate data since both would have identical data select match functions.

## SECTION 3 - ADDRESS PATHS

### 3.1  Introduction

The means for accessing data in the High Speed Data Buffer is provided by the S-Unit Address Paths shown generally in FIG. 2 and more specifically in FIG. 3. These address paths primarily provide addresses from the Instruction Unit 4 and the Data Integrity Unit in MBC 2 of FIG. 1 for accessing the high speed data caches. Other important functions related to accessing data are also included. The address paths have the responsibility for insuring that data returned at the end of an access is the requested data. This function occurs during a B-cycle and falls into several categories:

- Byte Rotation Amount Generation
- Data Enable Generation
- Clock Enable Generation
- Overlapping Storage Access Analysis
- Data Select Match
- Data Resident Match
- Protection Check
- Prefixing
- Address Compare

A request may not immediately complete if it is processed by a multiflow algorithm or if interlock conditions are present. If additional flows are necessary, B-cycle addresses must be retained for further processing. These addresses are held in a set of R-cycle registers (not shown) known as Address Storage Registers (ASRs).

## 3.2 R-Cycle Functional Description

3.2.1 Registers. The B-Cycle address path registers of FIG. 2 and 3 provide information which is required to access the storage arrays and to properly complete the requested operation. In general, these registers can accept addresses and other request information from either the I-Unit 4 of FIG. 1, the MBC 2 of FIG. 1, or from internal S-Unit address registers. Specific input paths to each of the registers are listed with the following descriptions.

3.2.1.1 Operand Address Register (OAR). The OAR 34 holds the address used to access the storage arrays associated with the operand pipeline. The arrays accessed with addresses in this register are the Operand Tag 29-2 (and the Data Select Tag 29-3), and the Translation Lookaside Buffer (TLB) 29-1 and OP cache 29-4.

Operand Tag Address Drive: Each associativity of the Operand Tag 29-2 and of the Operand DS TAG 29-3 is addressed with bits 18-26 of the OAR 34. This register is loaded every B-cycle from either the I-Unit OAG, an S-Unit ASR, the Translation (TR) Adder, or the OP pipe B-cycle Incrementor, according to the select code given in table 3-1. A similar structure exists on the I-Unit to address the Operand Data Select Tag. These sourcing units are not all shown explicitly since they are not important to the present invention except as indicating that some source does exist.

TLB Address Drive and Purge TLB Counter: Each associativity of the TLB 29-4 is addressed with a different hash function, in hash unit 51, of OAR bits 8-18 (with bit 19 also used) as described in Section 2. The OAR register 34

AMDH15/TSTLB
AMDH 3222 DEL
83/09/06

is loaded every B-cycle from one of the above-mentioned sources, or the Purge TLB (PTLB) Counter 53, according to the select code given in table 3-2. When the 8-bit PTLB counter 53 is selected, zeroes are forced into the appropriate four bit positions to make the TLB pointer invariant under the hash function. The control points for the counter 53 consists of an incrementor 54 and a reset line.

Table 3-1.  Operand Pipe Address Select Code

| SEL.IU | IMM.INC | OP.SELO:2 | SELECTION |
|--------|---------|-----------|-----------|
| 0 | 0 | 000 | IF ASR |
| 0 | 0 | 001 | DI ASR |
| 0 | 0 | 010 | EV ASR |
| 0 | 0 | 011 | PF ASR |
| 0 | 0 | 100 | OP ASRO |
| 0 | 0 | 101 | OP ASR1 |
| 0 | 0 | 110 | OP ASR2 |
| 0 | 0 | 111 | TR adder |
| 1 | 1 | XXX | B-cycle |
| 1 | X | XXX | I-Unit OAG |

Table 3-2.  TLB Address Select Code

| SEL.1 | SEL.CNT | SELECTION |
|-------|---------|-----------|
| 0 | 0 | S-Unit |
| 0 | 1 | Counter |
| 1 | 0 | I-Unit |
| 1 | 1 | I-Unit |

3.2.1.2  Length, Justification and Rotation Amount Register (LJRR):  The LJR holds the 5-bit specification of the length and justification and the 3-bit rotation amount of

AMDH15/TSTLB
AMDH 3222 DEL
83/09/06

the current operand pipeline access. Loaded every B-cycle, the LJR is sourced by the I-Unit, and S-Unit LJR storage register, or itself. In addition, the rotation amount may be selected from bits 29-31 of the Translation Adder. The rotation amount register actually consists of separate I-Unit and S-Unit copies which are latched and then selected into the B-cycle. This allows the I-Unit to freeze the rotate amount for algorithms such as store multiple. The capability is also provided for the S-Unit to force the rotate amount to zero for certain algorithms. The select code for the LJR is given in table 3-3.

Table 3-3. Length, Justification and
Rotation Amount Select Code

| SEL.SU | OP.LRJ.SELO:2 | SELECTION |
|--------|---------------|-----------|
| 0 | XXX | I-Unit |
| 1 | 000 | B-cycle |
| 1 | 001 | TR adder |
| 1 | 100 | LJR0 |
| 1 | 101 | LJR1 |
| 1 | 110 | LJR2 |

3.2.1.3 Store Mark Latches. The Store Mark Latches contain byte enable signals used when writing data into the operand buffer. These byte enables are generated during the P-cycle as a function of the request's length, justification and low-order address bits. The Store Mark Latches are loaded every B-cycle, according to the select code given in table 3-4.

28

Table 3-4. Next Store on Deck Select Code

| SEL.STOR0 | SEL.STOR1 | SELECTION |
|-----------|-----------|-----------|
| 0 | 0 | OP ASR0 |
| 0 | 1 | OP ASR1 |
| 1 | X | OP ASR2 |

3.2.1.4 Instruction Address Register (IAR). The IAR register 33 holds the address used to access the Instruction Cache. Each associativity of the Instruction Fetch (IF) Tag is addressed with bits 18-25 of the IAR. The IAR is loaded at the beginning of every B-cycle from the I-Unit IAG bus or an S-Unit ASR, according to the select code given in table 3-5.

Table 3-5. Instruction Fetch Pipe Address Select Code

| SEL.IU | IF.SEL0:2 | SELECTION |
|--------|-----------|-----------|
| 0 | 000 | IF ASR |
| 0 | 001 | DI ASR |
| 0 | 010 | PF ASR |
| 0 | 011 | EV ASR |
| 0 | 100 | OP ASR0 |
| 0 | 101 | OP ASR1 |
| 0 | 110 | OP ASR2 |
| 0 | 111 | TR Adder |
| 1 | XXX | I-Unit IAG |

Data Select Tag IAR: The DS Tag IAR may be loaded from the I-Unit IAG, from a separate IF ASR which resides on the I-Unit, or from the S-Unit OP Pipe selector (see table 3-1), according to the selection code given in table 3-6.

Table 3-6.  Data Select Tag IAR Select Code

| SEL.IF.ASR | SEL.IU | SELECTION |
|---|---|---|
| 0 | 0 | S-Unit |
| 0 | 1 | 1-Unit |
| 1 | X | DS IF ASR |

3.2.1.5  TAG2 Address Register (T2AR):  The T2AR register 35 register 35 holds the address used to access the Instruction Fetch TAG2 and Operand TAG2 Arrays.  There are actually separate OP and IF copies of bits 18-28 of the T2AR.  Each associativity of the OP TAG2 Array is addressed with bits 18-26 of the OP copy of the T2AR.  Each associativity of the IF TAG2 Array is addressed with bits 18-25 if the IF copy of the T2AR.  This register is loaded every B-cycle from the Data Integrity Unit in the MBC 2 or an S-Unit ASR via the TAG2 Incrementor 58, according to the select code given in table 3-7.

Table 3-7.  Tag 11 Pipe Address Select Code

| SEL.EXT | T2.SELO:2 | SELECTION |
|---|---|---|
| 0 | 000 | IF ASR |
| 0 | 001 | DI ASR |
| 0 | 010 | PF ASR |
| 0 | 011 | EV ASR |
| 0 | 100 | OP ASR0 |
| 0 | 101 | OP ASR1 |
| 0 | 110 | OP ASR2 |
| 0 | 111 | TR Adder |
| 1 | XXX | DI Unit |

The TAG2 Incrementor 58 allows the line address (bits 20-26) to be reset to zero or incremented by one, for use with background Tag array searches. This function is controlled by a reset and an increment signal, with reset dominant. When the line address is all ones, a B-cycle signal is asserted to indicate the end of the search.

## 3.3 B-Cycle Operations

### 3.3.1 Byte Rotation Amount Generation.
Data which exits the OPerand Cache or the Instruction Cache via the Common Fetch Byte Paths always leaves aligned to quarterline boundaries. If the requested data begins at any other byte boundary it requires rotation in order to properly present data to the Instruction Word Registers (IWR) 38 or the Operand Word Registers (OWR) 37. Similarly, store data returning from the Result Register (RR) bus 41 over the Common Store Byte Paths is unaligned to quarterline boundaries. If the requested storage locations begin on a non-quarterline boundary, store data requires rotation in order to properly present data to the HSDB.

During the B-Cycle, the Quarterline Byte Offset and the requested Length and Justification are combined to generate rotation control signals. Fetch data and store data are rotated in opposite directions, allowing one set of control functions to indicate how both fetch data and store data should be rotated. The operand pipeline and instruction pipeline generate slightly different Rotation Amount functions for fetch data.

### 3.3.1.1 Operand Pipeline.
The Operand Cache 29 supplies the E-Unit Operand Word Register High (OWRH) (the high-order half of OWR 37) and the Operand Word Register Low (OWRL) (the low-order half of OWR 37) with one to eight bytes of data accessed on any byte boundary. Requests of length one to three may be left or right justified within OWRH, or right justified within OWRL. Requests of length four can be put into either OWRH or OWRL. Requests of length five to seven may be left or right justified within the full doubleword OWR. Justification has no significance for requests of length eight.

The E-Unit Result Register High (RRH) and Result Register Low (RRL) supply the Operand Cache 29 with one to eight bytes of data to be stored, with the same length and justification formats described above.

The Rotation Amount is computed by subtracting the leftmost byte position of justified data from the Quarterline Byte Offset. Data to be fetched into the OWR is rotated in a left circular direction by this amount, whereas data to be stored from the RR is rotated in the opposite direction by the same amount.

3.3.1.2 Instruction Pipeline. Data returned from the Instruction Cache 28 must also be rotated. This function is combined with the IWR bubble up mechanism which is controlled by the I-Unit. Stores to the Instruction Cache are not allowed.

3.3.2 Data Enable Generation.

3.3.2.1 Operand Pipeline. An access to the Operand Cache 29 always places eight bytes of data on the Common Fetch Byte Paths output from OWR 37. Since requested operand data can be of any length between zero and eight, byte-specific data enables must be generated to select the proper bytes into the Operand Word Register 37. Bytes which are not enabled by these signals have zeros or pad characters loaded into their positions in the OWR. If all the data is confined to OWRH, then the data enables for OWRL are "don't cares."

3.3.2.2  Instruction Pipeline.  Since the I-Unit maintains validity status on each halfword in the IWR complex and remembers how many valid halfwords are expected from the Instruction Cache 28, the S-Unit does not need to supply data enables for instruction data.

3.3.3  OWR Clock Enable.  During a normal access to the Operand Cache, only one pipeline flow is required to provide the requested data to the OWR complex.  Under these conditions all byte positions in the OWR are clocked identically and the Data Enables determine which byte positions receive data and which receive zeros or pad characters.

During a Line Crosser access (which requires two pipeline flows for completion) a situation arises in which we need to independently clock each byte position in the OWR which receives S-Unit data.  The first pipeline flow provides data to the OWR which receives S-Unit data.  The first pipeline flow provides data to the OWR in the same manner as a normal data fetch.  During the second flow, S-Unit data is selectively loaded into the OWR such that required bytes from the end of the first line are not overwritten.  These byte-specific Operand Clock Enables are functions of the Line Crosser Flags, the Quarterline Byte Offset, the Length, and the Justification.

3.3.4.  Overlapping Storage Access Analysis.  As with other systems which incorporate pipelined operations to increase throughput, certain program sequences require the detection of multiple accesses to the same storage locations in order to insure that the actual execution matches the conceptual execution.  The common case is when the requests are a store followed by a fetch to the same location.  If this occurs a Store-Fetch interlock (SFI) is generated so that the correct data is fetched <u>after</u> the store has completed.

In the S-Unit 6, the detection of overlapping storage accesses occurs in parallel with each B-cycle access. The operand pipeline analysis is byte specific and detects overlapping accesses of all combinations of fetches and stores currently active within the S-Unit. The instruction pipeline analysis is line specific and detects pending stores that may modify instructions that are not yet buffered in the I-Unit. This mechanism, in conjunction with analysis performed by the I-Unit to cover its own instruction buffer, detects all stores into the instruction stream (STIS). The results of the analysis influence Data Resident Match for both the operand pipeline and the instruction pipeline.

In addition to detecting store-fetch overlap, the Overlapping Storage Access Analysis assures that references to potential operand synonyms are detected. The process of detecting overlapping accesses falls into two distinctive stages:

-- obtaining addresses which describe the locations accessed, and

-- comparing these descriptions with one another.

The locations accessed are described by generating the beginning and the ending address of each access. During a normal non-line crossing access, the beginning address is available directly from the OAR 34 while the ending address is generated by adding the length of the current B-cycle access to the OAR. Since any one pipeline flow can provide data from only one line in the Cache, the ending address calculation need only include the low order five bits of the beginning address.

AMDH15/TSTLB
AMDH 3222 DEL
83/09/06

Line crossing accesses generate a carry out of bit position 27, but these requests require two separate pipeline
in this situation of the locations accessed during the
first flow are bounded by the end of the line, while those
accessed during the second begin at the second line boundary. Ones or zeros are forced into the low order five bits
of the appropriate address before any comparisons occur.

At the end of the B-Cycle, the addresses are latched for
comparison with later flows. Associated with each operand
port are SFI Overlap Registers where the beginning and
ending low-order five address bits are saved. The comparison between these address descriptions of the accessed
locations is divided into several portions as follows:

      -- Byte Overlap
      -- Line Overlap
      -- Page Overlap

An interface exists that allows the I-Unit to control the
operand SFI mechanism during out-of-order store (OOS)
sequences. A set of OOS and Loop Number flags are provided
by the I-Unit with each operand request. The OOS flag,
when associated with a store, indicates that the store is
out-of-order. When associated with a fetch it indicates
that conditional SFI analysis should be performed as a
function of Loop Number match. If conditional analysis is
specified and a loop number match exists between two
requests SFI is inhibited to prevent a hang condition.

3.3.5 Operand Pipe Incrementor. The OP Incrementor 54
allows the contents of the OAR to be incremented by the
various amounts which are required for certain algorithms.
Table 3-8 shows the encoding of the Incrementor control
signals.

Table 3-8.   Operand Pipe Incrementor Control

| CONO:3 | INCREMENT AMT |
|--------|---------------|
| 0000 | 16 Mod 64 |
| 0001 | 16 |
| 0010 | ---- |
| 0011 | 16 Mod 32 |
| 0100 | 32 Mod 64 |
| 0101 | 32 |
| 0110 | ---- |
| 0111 | ---- |
| 1000 | 8 Mod 64 |
| 1001 | 8 |
| 1010 | ---- |
| 1011 | 8 Mod 32 |
| 1100 | 0 |
| 1101 | 64 |
| 1110 | 2048 |
| 1111 | 4096 |

| ADRS.SIZE | OSRS31 | ADDRESS MODE |
|-----------|--------|--------------|
| 0 | 0 | 32 bit |
| 0 | 1 | 31 bit |
| 1 | X | 24 bit |

3.3.6  Data Select Match.  At the beginning of an access to the Operand Cache 29 or the Instruction Cache 28, the requested data may reside in either one of the two associativities.  Before data can be loaded into the destination register, a decision as to which associativity contains the data must be made.  Data Select Match refers to the function which selects between data returned by the primary (P) and the alternate (A) associativities.  Data Select Match is the output from the IF comparator 61 or from the OP comparator 62.

The most salient characteristic of Data Select Match from comparator 61 or 62 is that it must be fast enough to select data from one or the other associativity for loading into the destination register (either OWR 37 or IWR 38) regardless of whether the requested data does or does not

AMDH15/TSTLB
AMDH 3222 DEL
83/09/06

reside in the HSDB. As explained later, the actual presence of the requested data in the HSDB is the responsibility of Data Resident Match from Comparator 63, which is not known in time to perform the selection. In one embodiment, the Data Select Match function physically resides on the I-Unit in order to eliminate the MCC crossing which would otherwise be incurred between the EAG and the B-cycle address registers.

Since the Data Select Match selection is binary, only one associativity needs testing for the presence of the requested data. When the test indicates presence, control signals select data from this associativity. When the test does not indicate presence, data from the other associativity is selected. In addition, OSRs exist which allow the selection to be forced either way.

For both the IF and OP pipeline, the test involves matching the Effective Address Field of a TAG entry for the primary associativity with bits 8-18 of the requesting address. Since bits 0-7 of the request address and address space identifiers do not participate in the match, two different lines which map to the same slot in the HSDB and have bits 8-18 in common cannot be distinguished by data select match. The Buffer Line Replacement algorithm is biased by Data Select Match to assure that this situation does not occur.

3.3.7 Data Resident Match. Since the HSDB contains only a subset of addressable data, the presence of the requested data in the Operand Cache 29 or the Instruction Cache 28 must be determined. This function, referred to as the Data Resident Match, is composed of two parts. The TLB Match function from TLB array 29-4 indicates whether the requested virtual page is allowed to have accessible lines resident in the buffer. The Tag Match function from tag array 28-2 or 29-2 indicates if the requested line of data within that page does reside in the cache. Both TLB and TAG match must be present to indicate that the requested line is in the cache.

3.3.7.1 TLB Match, Operand Pipe. The process of determining whether the translation for a particular page exists in the TLB involves comparing the requesting address with information stored in the TLB 29-4. Information contained in each associativity of the TLB is independently compared with the requesting address since the translation could reside in either one. The requesting addresss consists of the Effective Address, the Segment Table Origin, Page Size, Segment Size, and System/User bit.

The manner in which TLB match is constructed is determined by the state of the entry's valid bits. Each state of the valid bits selects a different subset of the TLB entry components previously described in Section 2. A TLB match occurs when there is a match with each of the selected TLB entry components. A real entry requires match on only the System/User bit, and the Effective Address of a real request. A common entry matches only with a virtual request and must match on DAT parameters, System/User Bit, and Effective Address. A virtual entry matches only with a virtual request and all components of the request address must match the TLB entry.

TLB Status Match. The TLB status match function is confined to the first two bytes of the TLB entry, which comprise the status field. The following conditions must exist to yield a match:

    1.   The entry must be valid.

2. The Virtual/Real status of the request must match that of the entry.

3. The System/User bit must match.

4. The Pre/Post Purge bit must match, unless the request is not subject to the current purge type.

Purge Match. When a TLB purge is initiated, the purge type is recorded in the Purge Match Register, and the Pre/Post Purge bit is toggled. The Purge Match Register contains a two-bit encoding of the purge type (see table 3-9) for single user purges. A match for a given associativity results when the following conditions are met:

1. The entry is pre-purge; its pre/post purge bit differs from the current Pre/Post Purge bit.

2. The entry type must match the current purge type. If a purge match occurs, the TLB entry is not allowed to match.

Table 3-9. TLB Purge Type Code

| PDMN.IN | VIRT.IN | PURGE TYPE |
|---------|---------|------------|
| 0 | 0 | All |
| 0 | 1 | System Virtual |
| 1 | 0 | User |
| 1 | 1 | User Virtual |

Status Save Register (SSR). The Status Save Register (SSR) saves the information necessary to update the first byte of the TLB status field for certain operations. This includes the valid bits, the eviction pending bits, the pre/post purge bit and the purge match bit. Either the primary or alternate TLB entry and associated purge match bit may be selected into this register. The register in turn feeds a selector which modifies the data appropriately, and presents it to be written back into the TLB. The selector

AMDH15/TSTLB
AMDH 3222 DEL
83/09/06

functions and associated control are described in table 3-10.

Table 3-10. TLB Status Byte Selector Operation

| +SEL.CODE:3 | PURG.MTCH | TLB ENTRY | | | | |
|---|---|---|---|---|---|---|
| | | VO:3 | EPO* | EP1* | P/P | Parity |
| 101 (NEW) | X | W | O | V | W | G |
| 001 (IPTE) | X | O | V | S | W | G |
| 010 (PTLB) | 1 | O | 1 | S | W | G |
| 010 (PTLB) | 0 | S | S | S | W | G |
| 110 (EVCT) | X | S | O | S | S | G |
| 001 (RST) | X | O | O | O | S | G |

LEGEND:   W - New value is written

S - Current value (saved in SSR) is rewritten

V - If current entry is valid a '1' is written, otherwise current value is rewritten

G - Parity is generated

\* Only the case for a flipper bit of zero is shown.  If the flipper bit were a one these two columns would be reversed.


## TLB EFFECTIVE ADDRESS MATCH

Bits 0-11 and 20 of the requesting address in the OAR are matched against both the primary and alternate TLB entry. Bits 12-19 are implicit in the TLB address.  In 4K pagemode a match is forced on bit 20, because in this case it is a real address bit.


Effective Address Register.  The Effective Address Register is loaded from the OAR and saves the effective address bits which are written into the TLB when a new entry is made.


## TLB DAT PARAMETERS MATCH

The current DAT parameters, which include the segment size, page size, and entry size, are matched against the corresponding field in the primary and alternate TLB entry. These bits are held in the CRO Match Register, which also provides the data into the TLB when making a new entry. It is loaded from the S-Unit copy of bits 8-12 of Control Register 0.

TLB STO MATCH

The current contents of the STO Match Register 65 are matched against the STO field of the primary and alternate TLB entry. The STO Match Register also provides the data into the TLB when making a new entry. It is loaded from the S-Unit copy of Control Register 1, bits 8-25.

3.3.7.2  TLB Match, Instruction Pipe.  Unlike the operand pipeline, the instruction pipeline does not have direct access to the TLB. Sequential instruction fetch (1 fetch) requests normally rely on the IF TLB to provide translation information. The IF TLB is composed of two registers, IF TLB 0 and IF TLB 1, which contain a summary of the OP TLB entry for the currently active insruction stream 0 page and instruction stream 1 page, respectively.

The IF TLB registers contain the following information:
* Valid bit (V)
* TLB P/A bit (P/A)
* TLB Flipper bit (F)
* Virtual Address bit 20 (VA 20)
* Virtual/Real bit (V/R)
* System/User bit (S/U)
* System Page address (SA)
* Protection Exception bit (PX)
* Address Match bit (AM)

If TLB match occurs when the following conditions are met for the selected IF TLB:

AMDH15/TSTLB
AMDH 3222 DEL
83/09/06

1.    If TLB V is on
2.    If TLB VA 20 matches the requesting VA 20
3.    If TLB V/R matches the requesting V/R
4.    If TLB S/U matches the requesting S/U

Condition 1 guarantees that there is a valid entry in the operand TLB for the instruction page and that the IF TLB is an accurate summary of that entry.

Condition 2 prevents IF TLB match when the instruction stream crosses a 2k address boundary. Crossing a 2k address boundary implies a new protection key block which requires revalidation of the PX bit.

Conditions 3 and 4 detect state changes in the sequential IF stream requiring re-validation of the IF TLB.

If IF TLB match occurs, then the SA is the system page address for the requesting instruction address, PX and AM are accurate status summaries, and F is the flipper bit to be used in IF Tag match.

If IF TLB match does not occur, then the IF TLB must be revalidated. If TLB validation is accomplished by simultaneously accessing the OP and IF pipelines, and saving the results of OP TLB match in the appropriate IF TLB register.

Target Fetch requests always access both OP and IF pipelines and always validate the appropriate IF TLB register for subsequent IF accesses.

If TLB V is reset whenever the IF TLB information may be inaccurate, to force a revalidation.

IF TLB V is reset in the following cases:

AMDH15/TSTLB
AMDH 3222 DEL
83/09/06

When the CPU protection key value is changed

After an SSK which changes the key in storage

After any change in the translation parameters

When the OP TLB entry is purged or displaced from the TLB


3.3.7.3  TAG Match, Operand Pipe.  During the B-cycle access of the OP pipe, tag entries from the primary and alternate associativities are matched against the requesting address.  There are three parts to OP TAG Match:

1.  The entry must be valid.  In the case of a fetch pass store, it must be private (modifiable) or modified.

2.  The TLB Primary/Alternate (P/A) bit in each entry selects either the primary or the alternate hashed address for comparison with the pointer field of that particular TAG entry.

3.  The Flipper bit in each TAG entry is compared with the Flipper bit from the TLB associativity selected by that entry's TLB P/A bit.


3.3.7.4  Tag Match, Instruction Pipe.  In the Instruction Cache there are two buffer lines associated with each tag entry.  To determine tag validity, effective address bit 26 is used to select the tag valid bit for the requested line (the other valid bit being for the companion line).  In all other respects IF TAG match in the instruction pipe is identical to OP TAG match.


3.3.8  Protection Check.  The S-Unit performs two types of protection checking:

-    Low Address Protection
-    Storage Key Checking

3.3.8.1  Low Address Protection.  Low Address Protection
(LAP) is provided as described in the IBM 370 Principles of
Operation.  A protection exception is posted if the LAP facility is active and a store to an address in the range
from 0 to 512 is detected (OAR bits 0-22 are all zeroes).

3.3.8.2  Storage Key Checking.  The S-Unit retains three
CPU keys used for key checking:
-       System State Key
-       User State Key
-       Test Protect Key

The I-Unit, when issuing a request, specifies which key to
compare against the key fields stored in each of the accessed TLB entries.  In 4K page mode, the even or odd TLB
key will be selected for comparison, based on effective address bit 20.  In 2K page mode both TLB key fields contain
the key associated with the 2k page.  A protection exception is asserted for a given TLB associativity if key
checking is active and the following conditions prevail:
1.   The request is a Fetch to a page which is fetch-
     protected, a Store, or a Test Protect.
2.   The CPU key is non-zero.
3.   The CPU key does not match the TLB key.

Data into the TLB key field may be selected from several
sources, which are described below.  The control of this
selection is summarized in table 3-11.

The Mainstore Key Register is used to initially make the
TLB entry, and to update the key on an SSK.  The low-order
byte contains the odd key and the high-order byte contains
the even key, or the updated key in the case of an SSK.
This register is loaded via the S-Unit message path, from
the GWRs for a new TLB entry, and from the RR+1 Register
for an SSK.

AMDH15/TSTLB
AMDH 3222 DEL
83/09/06

There are three identical OP Key Registers, corresponding
to each of the three OP ports; (see section 3.4.1.1). Each
such register holds the three bits from each associativity
of the TLB which reside in the same RAM block as the change
bit. This allows these bits to be restored to the TLB when
the change bit is written to a '1' during a store operation.

3.3.9 Prefixing. Prefixing is provided as outlined in the
IBM 370 Principles of Operation. Implementation of this
function involves prefix match, zero match, prefix selection.

3.3.9.1 Prefix Match. The current system prefix is held
in the System Prefix Register, and the current user prefix
is held in the User Prefix Register, which constitutes an
S-Unit copy of System Register 0. These registers are
loaded from the RR+1 Register via the S-Unit message path.
The contents of bits 0 - 19 of the appropriate register are
matched against the corresponding bits of the OAR. In the
case of 24 bit addressing a match is forced on bits 0 - 7.

Table 3-11. TLB Key Data Write Control

Input Data Selection:

| MSO:1 | OPA:B | PRIM | EVEN_KEY | ODD_KEY |
|-------|-------|------|----------|---------|
| 1 | X | X | Even MS Reg | Even MS Reg (even 2K page, or SSK) |
| 2 | X | X | Odd MS Reg | Odd MS Reg (odd 2K page) |
| 3 | X | X | Even MS Reg | Odd MS Reg (4K page) |
| 0 | n | 0 | Alt Opn Reg | (set alt chng bit) |
| 0 | n | 1 | Pri OPn Reg | Pri OPn Reg (se pri chng bit) |

(where n = 0, 1 or 2)

Key Block Selects and Write Enables:

| WRT.TLB | WRT.SELO:1 | WE.KEY1:2 | OAR_20 | FORC_20 | KEY.BS1:2 |
|---|---|---|---|---|---|
| 0 | X | 00 (not enabled) | X | 1 | 11 (both) |
| 1 | 0 | 11 (new TLB entry) | 0 | 0 | 01 (even) |
| 1 | 1 | 11 (SSK) | 1 | 0 | 10 (odd) |
| 1 | 2 | 00 (not enabled) | | | |
| 1 | 3 | 01 (set chng bit) | | | |

3.3.9.2 Zero Match. The contents of OAR bits 0 - 19 are checked for all zeroes. In the case of 24 bit addressing the high-order byte is guaranteed to contain zeroes.

3.3.9.3 Prefix Selection Mechanism. Based on Prefix Match, Zero Match, and certain control signals, the prefix mechanism will select the OAR, the current Prefix, or all zeroes in generating bits 0 - 19 of the absolute address. Control of the prefix mechanism is summarized in table 3-12.

3.3.10 Address Compare Match. Address Compare is provided as outlined in the IBM 370 Principles of Operation. The Address Compare Address is held in the Address Compare Register, which is an S-Unit copy of System Register 10. It is loaded via the S-Unit message path from the RR+1 Register.

Table 3-12.  Prefix Mechanism Control

| EN.PFX | FRCEO | FRCE.PFX | PFX.MTCH | ZERO.MTCH | SEL.PREFO:1 |
|--------|-------|----------|----------|-----------|-------------|
| 0 | X | X | X | X | 3 (OAR) |
| 1 | 1 | X | X | X | 2 (Zeroes) |
| 1 | 0 | 1 | X | X | 1 (Prefix) |
| 1 | 0 | 0 | O | O | 3 (OAR) |
| 1 | 0 | 0 | O | 1 | 1 (Prefix) |
| 1 | 0 | 0 | 1 | 0 | 2 (Zeroes) |
| 1 | 0 | 0 | 1 | 1 | 3 (OAR) |

3.3.10.1  Effective Address Compare Match.  The Address
Compare Register bits 0 - 26 are matched directly against
the corresponding bits of the OAR and the IAR.  Address
Compare bits 27 - 31 are compared with the beginning and
ending address of the current IF and OP request to determine if they lie within the range thus defined.  In addition, the IF pipe subtracts bits 29 - 30 of the starting
address from the corresponding Address Compare bits to
yield a code indicating which of the four halfwords fetched
produced a match.

3.3.10.2 Absolute Address Compare Match.  If Absolute Address Compare is selected, then match is forced over bits 0
- 19 of the effective address, as well as bit 20 if 2K page
size is in effect.  In place of these bits the Address
Match (AM) bit from the matching associativity of the OP
and IF TLB is used during the R-cycle to construct Absolute
Address Compare match for the OP and IF pipe, respectively.
The Address Compare function for the remaining low-order
bits is the same as that described above (see section
3.3.10.1).

## 3.4  R Cycle Functional Description

### 3.4.1  Address Storage Registers (ASRS).

When a requested operation cannot be completed in one pipeline flow, all the information which characterizes the request must be held for further processing.  The S-Unit Address Storage Registers (ASRs) provide storage for all addresses associated with the requests currently in progress.

### 3.4.1.1  Operand ASRs (OPO, OP1, OP2).

The OP ASRs are associated only with the operand algorithms.  These registers are loaded directly from the OAR or the OP Pipe Incrementor, according to the load enable code given in table 3-13.

Table 3-13.  OP ASR Load Enable Code

| Op.REG.ENBL.CNTLO:1 | Meaning |
|---|---|
| 0 | Load OPO |
| 1 | Load OP1 |
| 2 | Load OP2 |
| 3 | none |

Addresses of operand requests which must wait for completion because of an interlock condition are retained here as well as store addresses which are held until store data becomes available from the E-Unit.  Three OP ASRs are necessary to make it possible for the three-stage S-Unit pipeline to accept I-Unit OP requests at the maximum rate of one every cycle.

### 3.4.1.2  Length, Justification and Rotate Amount Storage Registers.

These registers (LJRO, LJR1, LJR2) correspond to the three OP ASRs, and serve to retain the specification of length, justification and rotate amount for their respective operand requests.  They are loaded from the LJRR, with the same load enable code used for the OP ASRs (see table 3-13).


3.4.1.3  Store-Fetch Interlock Overlap Registers.
These registers (SF10, SF11, SF12), which are each associate with an OP ASR, contain the address of the beginning and ending bytes in the quarterline to be accessed by the request.  These values are used for Store-Fetch Interlock analysis.  The Length Addition performed in the B-Cycle provides the only inputs.  The load enable code given in table 3-13 also applies to these registers.


3.4.1.4  Instruction ASR.  Retains the address of the last Instruction Cache access for the purpose of recycling the request if it doesn't complete.  Only one storage register is provided because the I-Unit has enough instruction buffering to keep its pipeline full without accessing the IF cache every cycle.  The IF ASR is loaded from the IAR.


3.4.1.5  Prefetch ASR.  The Prefetch ASR is used to store addresses for various multiflow algorithms whose functions include:
-    operand prefetching
-    instruction prefetching
-    operand potential page crossers
-    processing of unsolicited messages
The input to the Prefetch ASR comes from the TAG2 Address Register (T2AR) and the OP Pipe Incrementor.


3.4.1.6  Data Integrity ASR.  The Data Integrity ASR retains addresses associated with Data Integrity (DI) algorithms.  This register is loaded from the T2AR during the initial flow of a DI request.  No storage is provided for address bits 0 - 7.


AMDH15/TSTLB
AMDH 3222 DEL
83/09/06

**3.4.1.7 Eviction ASR.** The Eviction ASR retains addresses which are used to search through the cache during an eviction. The address is used to release lines as required. Inputs are provided by the OAR and the T2AR. No storage is provided for address bits 0 - 7.

**3.4.2 MBC Address Interface.**

**3.4.2.1 A-Bus Out Register.** The A-Bus Out Register is the source of all S-Unit addresses to be placed onto the A-Bus. The A-Bus Out Register is actually composed of two registers, an operand pipe A-Bus register and an instruction pipe A-Bus register, one of which may then be selected onto the bus. The operand A-Bus register is loaded in the R-cycle from the Translation Exception Address Register (TXA) or the OAR via the prefix mechanism. The instruction A-Bus register is also loaded in the R-cycle and is sourced by the IAR.

**3.4.2.2 Moveout Pointer Register (MOPR).**

The MOPR contains the operand TAG entry accessed by the current flow. The contents of this register are used to generate a TLB pointer to the Data Integrity Unit when a swap moveout is required. During swap move-outs the virtual address of the line to be displaced is not available, thus the TAG pointer must be used to access the system address. The MOPR may be loaded from either the TAG1 or TAG2 arrays. If a parity error is encountered in either array, the entry from the other may be used to perform moveouts.

**3.5. R-Cycle Operations**

**3.5.1 A-Bus Address Selection.**

The A-Bus Out Register is actually composed of two registers, one loaded with the B-cycle address in the instruction pipe. Once loaded, the request that gains bus access must have its address selected onto the bus. This function is performed in the R-cycle and is a function of request type, resource availability, and Data Resident Match.


## 3.5.2 Buffer Replacement.
An LRU Buffer Replacement Algorithm is implemented for both the IF and OP caches.


## 3.5.2.1 Replacement RAM Update.
The OP Replacement RAM address Register is loaded every cycle with bits 18 - 26 of the OAR. If a given valid access found the desired line resident in the buffer, the hot/cold bit is set to indicate which associativity contained the line. On a moveout access the hot/cold bit is written to point to the other associativity. In this way current LRU information is maintained for each primary/alternate pair of lines.


## 3.5.2.2 OP Replacement Algorithm.
If an OP Buffer access finds the line missing, then the Replacement algorithm is invoked to determine which associativity to replace. Replacement may be forced to primary or alternate under OSR control, which has the highest precedence.

Next, there are certain constraints involving the Data Select function, due to the requirement that two lines with the same Data Select Match function cannot occupy both associativities of a buffer set. To avoid such a situation, the algorithm is biased as follows:

1. Do not replace alternate with a line that matches the Data Select Tag.

2. Do not replace primary if the resulting Data Select Tag entry will match on a request to the alternate line (determined from Alternate Tag Pointer Match and a subset of TLB Effective Address Match).

AMDH15/TSTLB
AMDH 3222 DEL
83/09/06

3. Any ambiguity due to parity errors should be handled in a manner consistent with the above two rules.

If the above constraints do not apply then Replacement points to either the cold associativity as determined from the OP Replacement RAM, or to a random associativity. The choice between LRU or random is under OSR control.

### 3.5.2.3 IF Replacement Algorithm.

OSRs to force Replacement to primary or alternate and to select between LRU and random also exist for the IF buffer, with the force term predominant. The results of this analysis are stored inone of four latches, based on the BOM ID of the request. This saved replacement information may be overridden by the results of an IF Data Select analysis like that described above for the OP buffer, which is performed during the R-cycle of the preliminary flow of the IF move-in return. The results of this latter analysis are latched in case move-in deferral is enabled.

### 3.5.3 TLB Replacement.

When a new TLB entry is required, TLB replacement logic determines if there is an available System Address (SA) field in the addressed TLB set to receive the new system address. A SA field is available if it is not being used by a valid translation already, and if it does not have its associated Eviction Pending bit set. If there is one or more available SA fields in the addresses TLB set, the TLB replacement chooses one for replacement.

### 3.6 TRANSLATOR

The Translator maps Virtual Addresses to Real Addresses using Dynamic Address Translation as specified by the IBM 370 Principles of Operation. Facilities exist in the Translator for extended (31-bit) addressing specified by IBM.

AMDH15/TSTLB
AMDH 3222 DEL
83/09/06

The Translator receives direct requests from the OP pipe during the following conditions

- the CPU is operating in Virtual Addressing Mode and the translation is missing from the TLB.

- a Load Real Address (LRA) instruction is executed, or

- an Invalidate Page Table Entry (IPTE) instruction is executed.

The Translator provides the only address path from the A-Bus into the S-Unit. Because of this, the Translator must be captured to process any unsolicited messages received by the S-Unit that require an address.

3.6.1 Inputs. For Virtual to Real translation requests from the OP pipe, the Translator uses the following information:

- Primary Segment Table Origin (STO) from Control Register 1 (CR1) or Secondary Segment Table Origin from Control Register 7 (CR7)

- Page Size, Segment Size, and the Translation type bit form Control Register 0 (CR0)

- Virtual Address to be translated

- Opcode (type of translation required)

3.6.2 Registers.

LOGICAL ADDRESS REGISTER (LAR)

A 32-bit register which holds the Virtual Address during Virtual to Real translations. The Virtual Address held in the LAR consists of three fields: the Segment Table Index, Page Table Index, and Byte Index. The exact bit positions comprising each field depend on the Segment Size, Page Size, and Addressing Mode (24 or 31 bit addressing) in effect when the translation is requested. Figure 3-2 shows

the LAR fields for the various combinations of these parameters.

## TABLE ENTRY REGISTER (TER)

A 32-bit register which holds the various table entries used during a translation. The contents of TER depend on what phase of a translation is in progress and, for Page Table Entries, the Entry Size (either 16 or 32 bits) specified with the request. In the first phase of a translation, TER is loaded with the STO (or STE in the case of IPTE). During Segment and Page Table lookups, the correct word or half word is loaded into TER from data returned from the op-cache. Two byte page Table Entries require an additional shift beyond half word select in order to align the Page Address field properly. Sixteen bit PTEs are right shifted one byte, so that PTE bits 0-15 are loaded into TER bits 8-23. In this way PTE bit 0, which is bit 8 of the Page Address, is aligned with bit 8 of TER. Figure 3-3 shows the TER contents for different table entries, entry sizes, and page sizes.

## TRANSLATION EXCEPTION ADDRESS REGISTER

Used to hold the virtual address of the request that caused a translation exception. This is the address that is stored during a status switch as defined by the IBM 370 Principles of Operation.

### 3.6.3. Translator Control.

#### TRANSLATOR CONTROL CODE

Defines one of four states to indicate what function the Translator is performing. The states are:

- STE Access - form STE address from STO and Segment Table Index
- PTE Access - form PTE address from STE and Page Table Index

AMDH15/TSTLB
AMDH 3222 DEL
83/09/06

    -    Prefix - form Real Address from PTE and Byte Index

    -    Transfer - just pass an address from the TER to the Prefetch port

## DAT TYPE

A pair of latches used to define one of three states to indicate what type of translation is being performed. The states are:

    -    IPTE - Invalidate Page Table Entry

    -    LRA - Load Real Address

    -    CPU - Implicit DAT

The DAT Type, the state of the translation, and the control parameters (PS, ES, SS), determine the fields selected from the LAR and TER into the address adder.

## PORT ID

A code to define for whom the translator is currently performing a task.

## EXCEPTION LATCHES

Used to accumulate the six types of exceptions that may be encountered during a translation. The six exceptions are:

    -    Segment table length

    -    Page table length

    -    Segment invalid

    -    Page invalid

    -    Addressing

    -    Specification

The Translator will accumulate these exceptions and indicate to the pipe when an exception has been detected. The pipe will then release the requesting port from the translator wait state and the request will come down the pipe.

When the translator detects a match between the pipe port ID and the port ID it has stored, it will present the exception information, if any, and becomes free.

COMMON LATCH

Used to store the fact that the current translation is for a page in a common segment.  The Translator will retain this information and present it to the pipeline during the flow that makes the TLB entry.

Note that the Translator only holds latches to indicate what flow it is currently performing.  It is the pipeline's responsibility to determine the next flow for the Translator to perform.

Figure 3-2.  Logical Address Register Contents

| | | | | segment size | page size | address size |
|---|---|---|---|---|---|---|

```
//////// SX        PX      BX              64kB     44B   24 bits
0       8         16   20          31

/ 000    SX        PX      BX              64k      4k    31
0 1   4           16   20          31

//////// SX        PX      BX              64k      2k    24
0       8         16    21         31

/ 000    SX        PX      BX              64k      2k    31
0 1   4           16    21         31

//////// SX        PX      BX              1M       4k    24
0       8   12       20          31

/        SX        PX      BX              1M       4k    31
0 1          12       20       31

//////// SX        PX      BX              1M       2k    24
0       8   12       21         31

/        SX        PX      BX              1M       2k    31
0 1          12       21       31
```

AMDH15/TSTLB
AMDH 3222 DEL
83/09/06

57

Figure 3-3.   Table Entry Register Contents

| | entry | ES | PS |
|---|---|---|---|
| Length   Seg Table Addr   ////////   | (STO) (CRI) | 2B | - |
| 0         8                26     31 | | | |
| Seg Table Addr   /////   Length   | (STO) (CRI) | 4 | - |
| 0 1              20    25       31 | | | |
| len ////  Page Table Addr      P  C  I   | STE | 2B | - |
| 0    4    8                    29    31 | | | |
| /          Page Table Addr   I C  len   | PTE | 4B | - |
| 0          8                 28   31 | | | |
| 0              12    15 PTE bits | | | |
| ////////  Page Addr  I E A ////////// | PTE | 2B | 4kB |
| 0         8          20   23      31 | | | |
| 0            13    15 PTE bits | | | |
| ////////  Page Addr    I O ////////// | PTE | 2B | 2kB |
| 0         8          21   23      31 | | | |
| 1            20    22 PTE bits | | | |
| /   Page Address        O I P O/////// | PTE | 4B | 4kB |
| 0 1                  20  22  24    31 | | | |
| 1          21 22      PTE bits | | | |
| /   Page Address        I P O  /////// | PTE | 4B | 2kB |
| 0 1                  21 22     24    31 | | | |

AMDH15/TSTLB
AMDH 3222 DEL
83/09/06

The present example assumes an initially empty TLB 29-4 and initially empty I-fetch buffer 28. An instruction stream is initiated by a target fetch access when the I-unit 4 in FIG. 1 calculates an instruction address and presents that address to the S-unit on IAG lines 301 and OAG lines 303 in FIG. 2. The I-unit 4 then requests priority from the priority mechanism 201 in FIG. 2 for both the I-fetch and OP pipelines. When the priority mechanism 201 grants priority to the I-unit request, it selects the address on IAG line 301 into the instruction address register (IAR) 33 and the address on OAG line 303 into the operand address register (OAR) 34. From the OAR 34, the address is saved in an operand address storage register, for example register 80, in FIG. 2.

In the first access, The address in the IAR register 33 accesses the I-fetch array 28 while the same address in the OAR 34 accesses the operand array 29. The accessed entry in the TLB 29-4 is compared with the requesting address in the match comparator 63. Since the TLB is initially empty, the match comparator 63 indicates no TLB match in the OP status register 70. The control logic 49 examines the contents of the status register 70 and upon receiving a TLB no match indication initiates a translation process. The translation process is the well-known virtual-to-real translation process defined in the IBM System/370 Principles of Operation.

When the translation is complete, control 49 requests priority for both the I-fetch and OP pipelines from the priority mechanism 201. When the priority mechanism 201 grants the request, the address saved in the operand address storage register 80 is selected into the IAR 33 and the OAR 34. In this second access, the address in the OAR 34 accesses the TLB 29-4 and the translation is written into the TLB 29-4 at the addressed location. The
translation process is further described in the copending
applications APPARATUS FOR REVERSE TRANSLATION and
VIRTUALLY ADDRESSED CACHE.

Control 49 then initiates a third access by requesting priority from the priority mechanism 201 for both the operand
and the I-fetch pipelines. When the priority mechanism 201
grants priority to the request, the address is selected
from the operand address storage register 80 into the IAR
33 and OAR 34. In the third access, the address in the OAR
34 accesses the operand array 29 and specifically the TLB
29-4. The accessed TLB entry is compared with the request
address in the match comparator 63 which indicates a TLB
match in the OP status register 70. Also during the third
access, the address in the IAR 33 accesses the I-fetch array 28. The accessed tag from the tag array 28-3 is
compared with the requesting address in the IAR 33 in the
match comparator 63. Since the I-fetch buffer is initially
empty, the match comparator 63 indicates a line not present
indication in the operand status register 70. Control 49
recognizes the tag no match indication in the operand status register 70 and initiates a mainstore access to obtain
the requested line of data. The real address for the
mainstore access is sourced by the system address field of
the matching TLB entry. A mainstore access of the real address location is performed in the manner described in the
above-referenced copending application APPARATUS FOR REVERSE TRANSLATION.

When data from mainstore is available, control 49 requests
priority from the priority mechanism 201 for the fourth access. When the priority mechanism 201 grants priority to
the request, the address is selected from the operand address storage register 80 into the IAR 33 and the OAR 34.

AMDH15/TSTLB
AMDH 3222 DEL
83/09/06

The address in the IAR 33 accesses the I-fetch array 28 and the data from mainstore is stored in the I-fetch data array 28-1, the data select tag 28-2 is written, and the I-fetch tag 28-3 is written and made valid.

Further details concerning the data select tag are described in the copending application DATA SELECT MATCH. Control 49 then initiates a fifth access by requesting priority from the priority mechanism 201. When the priority mechanism 201 grants priority to the request, the address in the operand address storage register 80 is selected into the IAR 33 and into the OAR 34. The address in the OAR 34 accesses the operand array 29 and specifically the TLB 29-4. The accessed TLB entry is compared to the requesting address in the match comparator 63 which posts a TLB match indication in the OP status register 70. At the same time, the address in the IAR 33 accesses the I-fetch array 28. The tag accessed from the tag array 28-3 is compared in the match comparator 63 with the requesting address and a tag match indication is stored in the operand status register 71. The data select tag accessed from the I-fetch data select tag array 28-2 is compared in the comparator 61 which produces a data select match signal which selects data accessed from the I-fetch data array 28-1 into the IWR 38.

At this time the target fetch access is complete. Target fetches are used for initiating instruction streams. Target fetches are used to process branch instructions. They are also used as the final sequence in the processing of instructions which cause the I-fetch TLB to become invalid such as instructions which change the translation parameters. Performing a target fetch as the final sequence of such instructions revalidates the I-fetch TLB with the new parameters.

In each of the above accesses, the results of the operand TLB match as indicated by the match comparator 63 were stored in the I-fetch TLB register 28-4. In the first access, the I-fetch TLB valid bit was set to zero reflecting the TLB no match indication of that access. Accesses 2 through 5 set the I-fetch TLB valid bit to 1 indicating a valid translation. The value of address bit, the results of the protection analysis from comparator 63, the flipper bit from the matching TLB entry and the P/A bit are all saved in the I-fetch TLB register. Additionally, a system user bit, a virtual real bit, an address match bit, and a validity bit are stored in the IF TLB register 28-4. These eight bits are a subset of the information stored in the OP TLB 29-4. In an alternate embodiment, TLB 28-4 can store a complete set of information like OP TLB 29-4. In addition to the eight control bits, 17 system address bits are associated with TLB register 28-4. In an embodiment where two system addresses, SA0 and SA1, are employed, then two 8-bit control fields and two 17-bit system address fields are associated with register 28-4.

If the translation resides in the TLB and the data resides in the I-fetch buffer, a target fetch only requires the fifth access described above to complete. If the translation resides in the TLB but the data does not reside in the buffer, a target fetch requires accesses 3 through 5 to complete. The accesses as described above are simple examples of logical accesses. Actual sequences in the the preferred embodiment may combine two or more logical accesses into a single actual access. Similarly, one logical access may require two or more actual accesses to complete.

Once an instruction stream has been initiated by a target fetch, instructions are accessed sequentially. The I-unit initiates a sequential I-fetch by calculating the address of the instruction to be fetched and presenting that address across the IAG line 301. The I-unit then requests priority from the priority mechanism 201. When the priority mechanism 201 grants priority to the sequential instruction fetch, it selects the address on line 301 into the IAR 33. From the IAR 33 the address is stored into the I-fetch address storage register 76. The address in the IAR 33 also accesses the I-fetch array 28. The match comparator 63 compares the requesting address in the IAR 33 to the contents of the I-fetch TLB register 28-4 and to the tag accessed from the I-fetch tag array 28-3. The results of the match analysis are stored in the I-fetch status register 71.

If the I-fetch TLB register matches the requesting address and if the tag indicates that the data is present then the result of data select match from comparator 61 selects either primary or alternate data from the I-fetch data array 28-1 into the IWR 38 and the access is complete. This corresponds to target access 5 described above and will be referred to as I-fetch access 5 hereafter. If the I-fetch status register 71 indicates that the I-fetch TLB register matched but that the tag did not match then the data is not present in the I-fetch buffer and control 49 initiates a mainstore access. Such an access corresponds to target access 3 above and will be referred to as an I-fetch access 3 hereafter. The real address for the mainstore access is sourced by the system address field of the I-fetch TLB register. When the data is available from mainstore, control 49 requests priority from the priority mechanism 201. When priority mechanism 201 grants priority to the request, the address in the I-fetch address storage register 76 is selected into the IAR 33. The address in IAR 33 address the I-fetch array 28 and mainstore data is written into the I-fetch data array 28-1, the data select tag 28-2 is written if required and the I-fetch tag 28-3 is written and validated. This access corresponds to target access 4 described above and will be referred to as I-fetch access 4 hereafter. Control then requests priority of the priority mechanism 201 to initiate an I-fetch access 5.

A sequential I-fetch access may result in an I-fetch TLB miss indicated in I-fetch status register 71. The I-fetch TLB miss may be the result either of a sequential I-fetch across a page boundary as indicated by a mismatch between the requesting address bit 20 and the I-fetch TLB address bit 20, or the I-fetch TLB register may be invalid. The I-fetch TLB register may be made invalid by an I-fetch TLB monitoring control mechanism (not shown). The I-fetch TLB monitoring mechanism resets the validity of the I-fetch TLB register whenever the validity of that register is in doubt, for example, when the translation parameters have changed and the translation must be redone, when the central processor protection key has changed and the protection status must be revalidated, when a purge TLB instruction is executed, and other reasons.

The monitoring mechanism provides an external signal on line 304 to control 49 that causes control 49 to reset the validity bit in TLB register 28-4. The signal on line 304 can be provided by any external source desired. When a sequential I-fetch access results in an I-fetch TLB miss status indicated in I-fetch status register 71, control 49 initiates an I-fetch TLB validation request by requesting priority from the priority mechanism 201 for access to both the I-fetch and the operand pipelines. When the priority mechanism 201 grants the request, the address in the I-fetch address storage register 76 is selected into the IAR 33 and into the OAR 34. The address in the OAR

AMDH15/TSTLB
AMDH 3222 DEL
83/09/06

accesses the operand array 29 and the address in the IAR
accesses the I-fetch array 28. The match comparator 63
performs a TLB match on the operand TLB 29-4 with the requesting address. The match comparator 63 also compares
the I-fetch tag with the requesting address to produce the
I-fetch status in register 71. This access is analogous to
a target access 1. If the I-fetch status in register 71
indicates a TLB miss, then control 49 will initiate a
translation process. When the translation is complete,
comtrol 49·initiates an I-fetch access 2 completely analogous to a target access 4 except that the address source is
from the I-fetch ASR 76. This will be followed in turn by
I-fetch accesses 3, 4 and 5 to complete the request.

If an I-fetch TLB validation flow results in TLB match but
I-fetch line miss status in I-fetch status register 71,
then a mainstore access is initiated to be followed by
I-fetch flows 4 and 5 as described above. The real address
for the mainstore access is sourced by the system address
field of the matching TLB entry.

If an I-fetch TLB validation flow results in TLB match and
I-fetch tag match then the results of data select comparator 61 select either primary or alternate data from the
I-fetch data array 28-1 into the IWR 38 and the request is
complete. Each I-fetch TLB validation access updates the
status of the I-fetch TLB. If an accessed entry in the operand TLB does not match, then the I-fetch TLB validity bit
is set to 0. If either of accessed TLB entries indicate a
match then the I-fetch TLB validity bit is set to one and
the results of the match are summarized and stored in the
I-fetch TLB register.

Thus it can be seen that an instruction stream is initiated
by a target access which accesses both the I-fetch and operand pipelines simultaneously. This target access accesses the operand TLB and validates the I-fetch TLB. Thereafter, sequential I-fetch accesses access only the I-fetch pipeline using the TLB entry summary in the I-fetch TLB for match analysis. If during the course of sequential I-fetch processing, the I-fetch TLB does not match, either because the address crosses a page boundary or because the I-fetch TLB validity bit is reset, then an I-fetch TLB validation access is initiated down both the I-fetch and operand pipelines to access the operand TLB and again revalidate the I-fetch TLB entry.

In the preferred embodiment, the TLB register 28-4 includes two 8-bit control registers, I-fetch TLB0 and I-fetch TLB1. Each target access and sequential I-fetch access are tagged with a stream indicator indicating which I-fetch TLB that access is to reference. This allows a currently executing stream, stream 0, for example, to process a conditional branch instruction to stream 1, to access both the operand and I-fetch pipelines and to update the I-fetch TLB1 before the branch condition has been determined. If the branch condition fails, then the I-unit calculates the address of the fallthrough instruction stream 0 and requests a sequential I-fetch access to stream 0. If the branch condition succeeds, then the I-unit calculates the address of the next sequential instruction in the target stream and requests a sequential access for stream 1. In this manner, the execution of a conditional branch instruction can overlap the determination of the branch condition.

Each I-fetch TLB entry consists of a control field and a system address field. The system address field contains the system page address for the currently executing sequential instruction stream. The control field consists of three subfields: a TLB match field, a tag match field and a TLB status field. The TLB match field consists of four bits. An I-fetch TLB valid bit indicates the validity of the remaining information in the TLB entry. It is managed as described above being set to zero by a target fetch or an I-fetch TLB validation access which results in no TLB match in the operand pipeline, or by the I-fetch TLB valid monitor. The I-fetch TLB logical address bit saves the logical address bit 20 of the requesting address validating the I-fetch TLB entry. It is compared with the value of logical address bit for subsequent accesses to detect the crossing of the sequential I-fetch into a new page. When the sequential I-fetch crosses into a new page, the saved value of bit 20 will not match the new bit 20, the TLB entry will not match and an I-fetch TLB validation request will be initiated to validate the TLB entry for the new page. The remaining two bits in the TLB match field, the virtual/real bit and the system/user bit are saved to detect changes in the state of the I-unit 4 which require new translations. The tag match field consists of two bits, the primary/alternate TLB (P/A) bit, and the flipper (F) bit. The TLB P/A bit indicates whether the primary or the alternate associativity of the TLB 29-4 validated the I-fetch TLB. The flipper bit is a copy of the flipper bit of the TLB entry validating the I-fetch TLB. Both bits are used to match against the corresponding bits in the I-fetch tag to produce I-fetch tag match. The I-fetch TLB status field consists of the protection exception summary bit and the system address match bit. The protection exception summary bit saves the result of the protection analysis performed when the I-fetch TLB entry was validated. If on, use of the I-fetch TLB entry by a sequential I-fetch access will result in a protection exception. The system address match bit indicates that the associated stream is currently I-fetching in the system address page pointed to by the address compare register.

For a target fetch or for an I-fetch TLB validation access, the match comparator 63 uses information from TLB entries in the TLB 29-4 to resolve TLB match. This TLB match information is used to source the TLB P/A bit and flipper bit used in matching the tag entries from the I-fetch tag array 28-3. For sequential I-fetch accesses, information from the I-fetch TLB is used to resolve TLB match and to source the TLB P/A bit and flipper bit used in tag match.

An I-fetch TLB entry matches if it is valid and if the I-fetch TLB logical address 20 bit matches the requesting logical address bit 20 and if the V/R bit and the S/U bit in the I-fetch TLB entry match the corresponding bits of the request. The TLB P/A and the TLB flipper bit used in tag match are sourced directly from the TLB entry. Similarly, the protection exception information and the address compare information are sourced directly from the I-fetch TLB entry.

When a sequential I-fetch access results in status of I-fetch TLB match and tag miss in the I-fetch status register 71, a mainstore access is initiated to move the data into the I-fetch buffer as explained above. The I-fetch TLB system address field sources the system page address for the mainstore access. In the preferred embodiment, the I-fetch TLB system address field is physically implemented on the MBC 02 in FIG. 1. The remaining low-order address bits are sourced to mainstore from the IAR 33 through the register 305 when selected through selector 306 onto the A-bus 307 by I-fetch status register 71 indicating I-fetch TLB match and tag miss via select line 308.

CLAIMS:

1. A memory unit for use in a data processing system where the data processing system specifies memory locations with virtual addresses, the memory apparatus comprising,

first and second virtual stores addressed by virtual addresses,

a real store addressed by real addresses,

a virtual-to-real translator for translating virtual addresses to provide real addresses,

control means for causing said virtual-to-real translator to provide a translation whenever a real address corresponding to a virtual address is required.


2. - The apparatus of Claim 1 wherein said virtual-to-real translator includes first and second translation lookaside buffers corresponding to said first and second virtual stores, respectively, for storing real addresses corresponding to virtual addresses for said first and second virtual stores, respectively.


3. The apparatus of Claim 1 wherein said virtual-to-real translator includes a first translation lookaside buffer storing first entries relating virtual addresses to real addresses for said first virtual store, and includes a second translation lookaside buffer storing second entries storing subsets of the information stored in said first translation lookaside buffer.


4. The apparatus of Claim 3 including control means for accessing said second entries from said second translation lookaside buffer for sequential accesses to said second virtual store.

5. The apparatus of Claim 4 wherein said control means further includes means for accessing said first entries from said first translation lookaside buffer when accesses to said second virtual store are not sequential.

6. The apparatus of Claim 4 further including,

an address register for storing page addresses for addressing said second virtual store on page boundaries,

page-boundary crossing means for sensing when a new page address in said address register is for a different page than the previous address in said address register to form a page-boundary crossing signal,

control means for validating said second entries in response to a page boundary crossing signal.

7. The apparatus of Claim 3 further including,

control means for accessing said second entries,

validity sensing means for forming a validate signal,

means for accessing said first entries in response to said validate signal.

8. The apparatus of Claim 7 wherein said validity sensing means includes means for determining when accesses to said second store are not sequential to thereby form said validate signal.

9. The apparatus of Claim 7 wherein said validity sensing means includes means for sensing an external signal to form said validate signal.

10. The apparatus of Claim 7 wherein said validity sensing means includes,

address means for storing page addresses for addressing said second virtual store on page boundaries,

page-boundary crossing means for sensing when a new page address in said address means is for a different page than the previous address in said address means to form said validate signal.

11. The apparatus of Claim 7 further including means for storing a subset of accessed first entries in said second translation lookaside buffer to provide new valid second entries.

12. The apparatus of Claim 1 wherein each addressable location said virtual-to-real translator includes a stored control field and wherein each virtual address includes an addressing control field, and further including a comparator for comparing the stored control field with the addressing control field to provide a match signal,

control means for causing validation of the translation in the absence of a match signal.

13. The apparatus of Claim 1 wherein said virtual-to-real translator includes translation lookaside buffer means for storing real addresses corresponding to virtual addresses for both said first and said second virtual stores.

14. The apparatus of Claim 1 wherein said virtual-to-real translator includes first and second translation lookaside buffers corresponding to said first and second virtual stores, respectively, for storing real addresses corresponding to virtual addresses, and further including means for using a translation provided by said first translation lookaside buffer for said first virtual store and for said second virtual store.

15. The apparatus of Claim 1 wherein said first virtual store stores operand information and wherein said second virtual store stores instruction information,

an operand address register for addressing said first store,

an instruction address register for addressing said second store, whereby accessing of operands from said first store and accessing of instructions in said second store is performed concurrently.

16. The apparatus of Claim 3 further including addressing means for providing a virtual address for addressing said first translation lookaside buffer and said second virtual store with the same virtual address.

17. The apparatus of Claim 1 wherein said virtual-to-real translator includes first and second translation lookaside buffers addressed by virtual addresses,

and wherein said apparatus further includes addressing means for providing first virtual addresses for addressing said first virtual store and said first translation lookaside buffer and for providing second virtual addresses for addressing said second translation lookaside buffer and said second virtual store.

18.    The apparatus of Claim 17 wherein said addressing means further includes means for providing a virtual address for addressing said first and second translation lookaside buffers and said first and second virtual stores with the same virtual address.

19.    The apparatus of Claim 17 wherein said first and said second translation lookaside buffers each have addressable locations including a stored control field wherein said first and second virtual addresses include first and second addressing control fields, respectively, and said apparatus further including first and second comparators for comparing the first and second stored control fields with the first and second addressing control fields, respectively, to provide first and second control match signals.

AMDH15/TSTLB
AMDH 3222 DEL
83/09/06

20. The apparatus of Claim 1 wherein said virtual-to-real translator further includes first and second translation lookaside buffers storing first and second stored control fields, respectively, addressed by virtual addresses and wherein said first and second virtual stores include,

first and second tag stores, respectively, storing first and second stored tag fields, respectively, addressed by virtual addresses, and further including first and second data arrays, respectively, for storing first and second data fields, respectively, addressed by virtual addresses,

and further including addressing means for providing first and second virtual addresses for addressing said first and second virtual stores, said first and second translation lookaside buffers, respectively, said first and second virtual addresses having first and second addressing tag fields, respectively, and having first and second addressing control fields, respectively,

first and second comparator means, said first comparator for comparing said first addressing tag field and said first addressing control field with said first stored tag field and said first stored control field, respectively, to provide a first match signal for indicating that the first data field is resident in said first virtual store, and said second comparator for comparing said second addressing tag field and said second addressing control field with said second stored tag field and said second stored control field, respectively, to provide a second match signal for indicating that the second data field is resident in the second virtual store.

AMDH15/TSTLB
AMDH 3222 DEL
83/09/06

21. The apparatus of Claim 1 wherein said virtual-to-real translator further includes first and second translation lookaside buffers storing first and second stored control fields, respectively, addressed by virtual addresses and wherein said first and second virtual stores include,

first and second tag stores, respectively, storing first and second stored tag fields, respectively, addressed by virtual addresses, and further including first and second data arrays, respectively, for storing first and second data fields, respectively, addressed by virtual addresses,

and further including addressing means for providing first and second virtual addresses for addressing said first and second virtual stores, said first and second translation lookaside buffers, respectively, said first and second virtual addresses having first and second addressing tag fields, respectively, and having first and second addressing control fields, respectively,

first and second comparator means, said first comparator for comparing said first addressing tag field and said first addressing control field with said first stored tag field and said first stored control field, respectively, to provide a first control match signal and a first tag match signal, respectively, and said second comparator for comparing said second addressing tag field and said second addressing control field with said second stored tag field and said second stored control field, respectively, to provide a second control match signal and a second tag match signal, respectively, whereby the presence of the first control match signal and a second tag match signal indicates that the second data field is resident in the second virtual store.

AMDH15/TSTLB
AMDH 3222 DEL
83/09/06

22. The apparatus of Claim 21 wherein said second stored control field is a subset of said first stored control field.

FIG. — 1

FIG.—2